(19) Europäisches Patentamt
European Patent Office
Office européen des brevets

(11) Publication number : **0 593 230 A1**

(12) **EUROPEAN PATENT APPLICATION**

(21) Application number : **93308046.7**

(22) Date of filing : **08.10.93**

(51) Int. Cl.$^5$ : **C23F 11/10,** C23F 11/12, C23F 11/18, E21B 41/02

(30) Priority : **14.10.92 US 960618**

(43) Date of publication of application : **20.04.94 Bulletin 94/16**

(84) Designated Contracting States : **DE DK FR GB IT NL**

(71) Applicant : **HALLIBURTON COMPANY**
**P.O. Drawer 1431**
**Duncan Oklahoma 73536 (US)**

(72) Inventor : **Walker, Michael L.**
**1813 Terrace**
**Duncan, Oklahoma 73533 (US)**

(74) Representative : **Wain, Christopher Paul et al**
**A.A. THORNTON & CO. Northumberland House 303-306 High Holborn**
**London WC1V 7LE (GB)**

(54) **Metal corrosion inhibiting compositions.**

(57) The corrosion of metal surfaces is reduced or inhibited by treating the surfaces with a mixture of an aldehyde and an antimony or bismuth compound. The aldehyde has the formula

$$R_1C(R_2)=C(R_3)\text{-}CHO$$

where $R_1$ is an aliphatic $C_3$ to $C_{12}$ group or an aryl group ;
$R_2$ is H, an aliphatic $C_3$ to $C_{12}$ group, or an aryl group ; and
$R_3$ is H, an aliphatic $C_1$ to $C_5$ group, or an aryl group ; or
any of $R_1$, $R_2$ and $R_3$ is another atom or group which does not adversely affect the corrosion inhibition properties of the aldehyde. Preferred aldehydes are cinnamaldehyde and its derivatives.

EP 0 593 230 A1

This invention relates generally to metal corrosion inhibiting compositions.

The metal surfaces of tubular goods, heat exchangers, pumps and a variety of other equipment are often contacted by corrosive fluids, e.g. aqueous acids, water vapour in the presence of air or oxygen, and other corrosive fluids. For example, in the stimulation of oil and/or gas wells, aqueous solutions containing acids and other corrosive compounds are commonly utilized. When such fluids contact the metal surfaces of pumps, casing, tubing and the like, the metal surfaces can be substantially corroded. Also, corrosive fluids are often produced from subterranean formations, e.g. water in association with acid gases such as carbon dioxide and hydrogen sulfide. The produced fluids can cause corrosion damage to metal surfaces in production and processing equipment.

While a variety of corrosion inhibiting compositions and methods have heretofore been developed and used, there is a continuing need for improved corrosion inhibiting compositions and methods which are effective at high temperature and pressure conditions, are relatively inexpensive and provide residual protection for extended periods of time. We have now devised some improved corrosion inhibiting compositions by which the needs can be met.

The corrosion inhibiting compositions of this invention are basically comprised of one or more aldehydes and an antimony or bismuth compound or any mixture of two or more such compounds.

Suitable aldehydes are those having the general formula:

$$R_1-\overset{\displaystyle R_2}{\overset{|}{C}} = \overset{\displaystyle R_3}{\overset{|}{C}} - \overset{\displaystyle H}{\overset{|}{C}} = O$$

wherein $R_1$ represents a substituent which does not adversely affect the corrosion inhibition properties of said aldehyde, a saturated or unsaturated aliphatic hydrocarbon group containing from about 3 to about 12 carbon atoms which is unsubstituted or which contains one or more substituents which do not adversely affect the corrosion inhibition properties of said aldehyde or an aryl group which is unsubstituted or which contains one or more substituents which do not adversely affect the corrosion inhibition properties of said aldehyde,

$R_2$ represents hydrogen, a substituent which does not adversely affect the corrosion inhibition properties of said aldehyde, a saturated or unsaturated aliphatic hydrocarbon group containing from about 3 to about 12 carbon atoms which is unsubstituted or which contains one or more substituents which do not adversely affect the corrosion inhibition properties of said aldehyde or an aryl group which is unsubstituted or which contains one or more substituents which do not adversely affect the corrosion inhibition properties of said aldehyde, and

$R_3$ represents hydrogen, a substituent which does not adversely affect the corrosion inhibition properties of said aldehyde, a saturated or unsaturated aliphatic hydrocarbon group containing from about 1 to about 5 carbon atoms which is unsubstituted or which contains one or more substituents which do not adversely affect the corrosion inhibition properties of said aldehyde or an aryl group which is unsubstituted or which contains one or more substituents which do not adversely affect the corrosion inhibition properties of said aldehyde, wherein the total number of carbon atoms in $R_1$, $R_2$, and $R_3$ is in the range of from 1 to about 16.

The corrosion inhibiting compositions can be dispersed or dissolved in aqueous carrier liquids. Upon contacting metal surfaces, the compositions form protective coatings thereon whereby the corrosion of the metal surfaces is thereafter strongly inhibited. The compositions can include, as an additional component, a quaternary ammonium compound, and various other components such as solvents, dispersing agents and the like can be utilized.

The methods of the invention basically comprise contacting one or more metal surfaces with a corrosion inhibiting composition of this invention whereby the corrosion of the surfaces is inhibited.

The compositions of this invention which form corrosion inhibiting coatings on metal surfaces when contacted therewith are comprised of one or more metal surface coating aldehydes combined with a metal compound selected from the group consisting of antimony compounds, bismuth compounds and mixtures of such compounds. The antimony and/or bismuth metals enhance the corrosion inhibition produced by the aldehydes. The compositions can be utilized directly to contact, coat and protect metal surfaces or they can be dissolved or dispersed in aqueous liquid carriers. The compositions, or solutions or dispersions thereof in aqueous liquids are brought into contact with metal surfaces to be protected at temperatures and for periods of time sufficient to form protective coatings on the metal surfaces.

A variety of metals can be protected from corrosion when contacted with corrosive fluids in accordance with this invention. Examples of such metals are ferrous metals, low alloy metals (e.g. N-80 grade), stainless steel, (e.g. 13Cr), copper alloys, brass, nickel alloys, duplex stainless steel alloys and the like. The compositions and methods of this invention are particularly suitable for protecting metal surfaces of tubular goods, mixing tanks, pumps, conduits and other equipment used in association with processes for producing or enhancing the production of hydrocarbons from subterranean formations. The invention is particularly applicable to the protection of ferrous metal surfaces when in contact with acids, e.g. corrosive acids such as hydrochloric acid, nitric acid, sulfuric acid, etc.

Among the $R_1$, $R_2$ and $R_3$ groups which do not adversely effect the corrosion inhibition properties of the aldehyde are, for example, alkyl groups containing from about 1 to 4 carbon atoms, alkoxy groups containing from about 1 to 4 carbon atoms, halides, hydroxyl groups, dialkylamino groups and hydrocarbon groups containing sulfur or nitrogen atoms.

Examples of suitable aldehydes as defined above are 2-hexene aldehyde, 2-heptene aldehyde, 2-octene aldehyde, 2-nonene aldehyde, 2,4-hexadiene aldehyde, 2,4-heptadiene aldehyde, 2,4-decadiene aldehyde, cinnamaldehyde, dicinnamaldehyde, hydroxycinnamaldehyde, methylcinnamaldehyde, methoxycinnamaldehyde, nitrocinnamaldehyde, trimethylammoniumcinnamaldehyde sulfate, chlorocinnamaldehyde, $\alpha$-nonylidenebenzeneacetaldehyde and the like. The trans forms of the aldehydes are generally preferred. Of the foregoing aldehydes, cinnamaldehyde, hydroxycinnamaldehyhde and methoxycinnamaldehyde are preferred, with cinnamaldehyde being the most preferred.

The metal compound component of the corrosion inhibiting compositions is comprised of antimony compounds, bismuth compounds and mixtures of such compounds. Examples of antimony compounds which can be utilized in the compositions are antimony oxides such as antimony trioxide, tetraoxide and pentaoxide, antimony halides such as antimony chloride and antimony fluoride, antimony tartrate, antimony citrate, alkali metal salts of antimony tartrate and citrate, alkali metal salts of pyroantimonate, antimony adducts of ethylene glycol and other similar antimony compounds. Preferably, the antimony compound or compounds employed are selected from the group consisting of antimony oxides, antimony halides and antimony adducts of ethylene glycol. Most preferably, the antimony compound is an antimony adduct of ethylene glycol.

Examples of bismuth compounds that can be employed include bismuth oxides such as bismuth trioxide, tetraoxide and pentaoxide, bismuth halides, bismuth tartrate, bismuth citrate, alkali metal salts of bismuth tartrate and citrate, bismuth oxyhalogens and other similar bismuth compounds. Preferred bismuth compounds are bismuth oxides and halides with the most preferred bismuth compounds being bismuth oxides.

The aldehyde and metal components in a corrosion inhibiting composition of this invention are generally present in the composition in a weight ratio of aldehyde(s) to metal compound(s) in the range of from about 10:1 to about 1:15. Most preferably, the aldehyde and metal compound components are present in a weight ratio of about 1:1.

A quaternary ammonium compound can optionally be included in the corrosion inhibiting compositions in that the presence of the quaternary ammonium compound can increase the level of inhibition of corrosion achieved by the compositions in certain applications. Examples of quaternary ammonium compounds that can be used are aromatic quaternary compounds such as alkylpyridine-N-methyl chloride, alkylpyridine-N-benzyl chloride, alkylquinoline-N-benzyl chloride, alkylisoquinoline quaternary compounds, benzoquinoline quaternary compounds, chloromethylnaphthalene quaternary compounds such as chloromethylnaphthyl quinolinium chloride and mixtures of the above compounds. The alkyl group associated with the pyridine compounds can contain from 1 to about 6 carbon atoms and the alkyl groups associated with the guinoline compounds can contain from 1 to about 8 carbon atoms. When included, the quaternary ammonium compound is present in the corrosion inhibiting composition in a weight ratio to the aldehyde therein in the range of from about 1:10 to about 10:1, preferably a weight ratio of about 2:1.

In most applications, it is advantageous to combine the corrosion inhibiting compositions of this invention with aqueous liquid carriers. The aqueous liquids preferably have a pH in the range of from about 1 to about 4, but they can be any aqueous solution which does not adversely react with the components of the corrosion inhibiting composition used. In formation acidizing and acid cleaning applications, the aqueous liquid carrier is generally an aqueous acid solution comprising water and one or more strong mineral acids such as hydrochloric acid.

It is generally advantageous to combine additional compounds with the aqueous liquid-corrosion inhibiting composition mixture. That is, optional components such as dispersing agents, aromatic hydrocarbons having high oil wetting characteristics, solvents, other surfactants and mixtures thereof can be employed. Such additives can broaden the utility of the corrosion inhibiting compositions, enhance the effectiveness of the compositions and/or facilitate the use thereof.

Aromatic hydrocarbons having high oil wetting characteristics can increase the degree of inhibition of corrosion achieved by the inventive compositions in certain applications. Substantially any aromatic hydrocarbon compound that exhibits high oil-wetting characteristics can be employed. Examples include xylenes, saturated biphenyl-xylene mixtures, heavy aromatic naphtha, tetralene, tetrahydroquinoline, tetrahydronaphthalene and the like.

A solvent such as an alkyl alcohol, glycol or mixtures thereof can be added to the corrosion inhibiting compositions to assist the maintenance of the components of the compositions in homogenous mixtures. Examples of alkyl alcohols and glycols that can be used include methyl alcohol, ethyl alcohol, propyl alcohol, isopropyl alcohol, ethylene glycol, propylene glycol and the like. Preferably, the alkyl alcohol and/or glycol is employed in an amount no greater than that which is sufficient to maintain the components as a homogenous admixture.

One or more dispersing surfactants can be included in the aqueous liquid carrier containing a corrosion inhibiting composition of this invention to facilitate the dispersion of the corrosion inhibiting composition in the aqueous liquid. Due to their inert nature, non-ionic surfactants are preferred. Examples of such surfactants include ethoxylated oleates, tall oils and ethoxylated fatty acids. Ethoxylated alcohols such as octylphenol, nonylphenol, tridecylphenol and the like, ethoxylated with from about 8 to about 20 moles of ethylene oxide per mole are preferred.

In preparing the corrosion inhibiting compositions of this invention, the aldehyde and antimony and/or bismuth compound components utilized are mixed in a weight ratio of aldehyde to metal compound in the range of from about 10:1 to about 1:15. If a quaternary ammonium compound is utilized, e.g., chloromethylnaphthal quinolinium chloride, it is combined with the aldehyde-metal compound mixture in a weight ratio to the aldehyde component in the range of from about 1:10 to about 10:1. As mentioned above, other components such as solvents, surfactants and the like can be included in the corrosion inhibiting compositions as required in appropriate amounts.

When the corrosion inhibiting composition of this invention is combined with an aqueous liquid carrier, it is mixed therewith in an amount in the range of from about 0.1% to about 3%, more preferably in the range of from about 0.4% to about 2% by weight based on the total weight of aqueous liquid carrier and corrosion inhibiting composition. As will be understood by those skilled in the art, the particular quantity of corrosion inhibiting composition used in an aqueous liquid carrier depends upon the degree of inhibition of corrosion desired for the particular application, the nature of the liquid carrier, the temperature at which the contact is carried out and other known factors. Generally, however, little additional benefit is gained by using greater than about 3% by weight of the corrosion inhibiting composition in the aqueous liquid. The corrosion inhibiting compositions and the aqueous solutions or dispersions thereof can be prepared utilizing conventional mixing equipment.

If an aromatic hydrocarbon compound is employed, it is preferably added to the inhibitor composition in an amount in the range of from about 0.5% to about 40% by weight of the aqueous liquid and corrosion inhibiting composition. When a dispersing agent is employed for dispersing the corrosion inhibiting composition components and other additives in the aqueous liquid, it is preferably added to the inhibitor composition in an amount in the range of from about 1% to about 20% by weight of the corrosion inhibiting composition.

The methods of this invention basically comprise the steps of contacting a metal surface with a corrosion inhibiting composition described above at a temperature and for a time period sufficient to form a protective coating on the metal surface and inhibit the corrosion thereof. The metal surface can be contacted with a corrosion inhibiting composition of this invention in any manner that results in the formation of a surface deposit of the composition on the metal. For example, the metal surface can be contacted with the composition by immersing the metal surface in the composition or by flowing the composition across the surface. As mentioned above, the corrosion inhibiting compositions of this invention are usually dissolved or dispersed in an aqueous liquid carrier, and the aqueous liquid-corrosion inhibiting composition combination is brought into contact with the metal surface at a temperature and for a time period sufficient to form a protective coating thereon.

A metal surface to be protected is preferably contacted with a corrosion inhibiting composition of this invention for a time period ranging from about 15 minutes to over several hours at elevated temperatures. When the corrosion inhibiting composition is dissolved or dispersed in an aqueous liquid, a satisfactory protective coating is generally formed by flowing the aqueous liquid-corrosion inhibiting composition combination over the metal surface to be protected for a time period in the range of from about ½ to about 48 hours.

The temperature at which the metal surface is contacted with the coating composition can range from ambient temperature to about 500°F and higher. Preferably, the temperature at which the metal surface is contacted with the corrosion inhibiting composition is in the range of from about 240°F to about 450°F.

The methods of this invention can be utilized to protect metal surfaces of tubular goods and other equipment associated with wells during treatments of subterranean formations with aqueous acid solutions to provide corrosion protection to the tubular goods and equipment during and subsequent to the treatments. In such an application, the aqueous liquid in which the corrosion inhibiting composition is dissolved or dispersed can be the acidizing treatment solution, e.g., a 15% by weight aqueous hydrochloric acid solution. The acid solution containing the composition is generally pumped through tubular goods disposed in the well bore and introduced into the subterranean formation to be acidized. The corrosion inhibiting composition in the acid solution forms a uniform, non-porous coating on the metal surfaces of the tubular goods and other metal equipment which

it contacts thereby inhibiting the corrosion of the tubular goods during the acid treatment. The injected acid solution dissolves soluble materials within the subterranean formation whereby at least a portion of the acid in the solution is neutralized. The solution is then produced back by way of the tubular goods in the well bore for removal at the surface. The protective coating on the metal surfaces provided by the corrosion inhibiting compositions of this invention protects the surfaces from corrosion during the treatment as well as afterwards when corrosive fluids are produced from the well, e.g., connate water along with carbon dioxide, hydrogen sulfide or the like.

Thus, the methods and corrosion inhibiting compositions of this invention provide uniform non-porous, non-corrosive protective coatings on metal surfaces to inhibit or prevent the corrosive effects of corrosive fluids in contact therewith. The specific aldehyde and antimony or bismuth compound(s) forming the corrosion inhibiting compositions synergistically function together to substantially reduce corrosion of metal surfaces. The corrosion inhibiting coatings formed on the metal surfaces adhere thereto for relatively long periods of time and protect the metal surfaces against attack by a variety of corrosive fluids.

In order to further illustrate the corrosion inhibiting compositions and methods of this invention, the following examples are given.

## Example 1

Two different aldehyde blends were prepared, the first (Blend No. 1) contained an aldehyde, a quaternary ammonium compound and a dispersing agent and the second (Blend No. 2) contained an aldehyde and a dispersing agent only. 2% by volume amounts of the blends were added to test samples of an aqueous 15% by weight hydrochloric acid solution. Antimony compounds were then added to some of the test samples in various amounts. The test samples with and without antimony compounds were tested to determine the corrosion losses of various metals in contact therewith at 300°F for 2 hours. That is, metal corrosion coupons were weighed and placed in the samples which were then maintained at 300°F for 2 hours under a 600 psig overpressure. At the end of 2 hours, the coupons were removed from the samples, weighed and the corrosion losses of the coupons in pounds per square foot were determined. The results of these tests are set forth in Table I below.

## TABLE I

Corrosion Inhibiting Composition Tests

| Aldehyde Blend No. | Aldehyde Blend Components, % By Weight of Blend: Aldehyde[1] | Quaternary Ammonium Compound [2] | Dispersing Agent [3] | Blend Concentration in Acid Solution, % by Volume | Antimony Compound [4] Concentration in Acid Solution, % By Volume | Coupon Metal Type | Corrosion Loss, $lb/ft^2$ |
|---|---|---|---|---|---|---|---|
| 1 | 42.1 | 42.1 | 15.8 | 2 | 0 | N80[5] Steel | 0.025 |
| 1 | 42.1 | 42.1 | 15.8 | 2 | 1 | N80 Steel | 0.004 |
| 2 | 72.7 | 0 | 27.3 | 2 | 0 | N80 Steel | 0.141 |
| 2 | 72.7 | 0 | 27.3 | 2 | 1 | N80 Steel | 0.011 |
| 1 | 42.1 | 42.1 | 15.8 | 2 | 0 | 13Cr[6] | 0.063 |
| 1 | 42.1 | 42.1 | 15.8 | 2 | 0.4 | 13Cr | 0.015 |
| 2 | 72.7 | 0 | 27.3 | 2 | 0 | 13Cr | 0.395 |
| 2 | 72.7 | 0 | 27.3 | 2 | 0.4 | 13Cr | 0.008 |
| 1 | 42.1 | 42.1 | 15.8 | 2 | 0 | AF-22[7] | 0.539 |
| 1 | 42.1 | 42.1 | 15.8 | 2 | 0.4 | AF-22 | 0.007 |
| 2 | 72.7 | 0 | 27.3 | 2 | 0 | AF-22 | 0.673 |
| 2 | 72.7 | 0 | 27.3 | 2 | 0.4 | AF-22 | 0.012 |

[1] Cinnamaldehyde
[2] Mixture of 60% by weight chloromethylnaphthyl quinolinium chloride and 40% by weight isopropyl alcohol.
[3] Nonylphenol ethoxylated with 20 moles ethylene oxide per mole.
[4] 17% by weight antimony in propylene glycol.
[5] N80 steel is a low grade tubular steel.
[6] 13Cr is 13% chromium martensitic steel.
[7] AF-22 is 22% chrome-5% nickel duplex steel.

From Table I it can be seen that the corrosion inhibiting compositions of the present invention, i.e., those containing aldehyde and antimony produced excellent corrosion inhibition of the metals tested.

### Example 2

Additional aldehyde containing or reaction blends were prepared as follows. The condensation reaction product of acetophenone, cinnamaldehyde, formaldehyde and thiourea was prepared by reacting the foregoing components in the presence of hydrochloric acid under reflux conditions. The condensation reaction product produced was combined with about 17% by weight (of the resulting blend) of a dispersing agent comprised of nonylphenol ethoxylated with about 20 moles of ethylene oxide per mole. The reaction product-dispersant blend was designated Blend No. 1. Blend No. 2 was formed by adding a quaternary ammonium compound, i.e., chloromethylnaphthal quinolinium chloride, to a quantity of Blend No. 1 in an amount of about 40% by weight of the resulting three component blend. Blend No. 3 was prepared by mixing cinnamaldehyde with a quaternary ammonium compound, i.e., chloromethylnaphthal quinolinium chloride and a dispersing agent, i.e., nonylphenol ethoxylated with 20 moles of ethylene oxide per mole. The quaternary ammonium compound was present in Blend No. 3 in an amount of about 40% by weight, and the dispersing agent was present in an amount of about 20% by weight based on the weight of all the components in the blend. Blend No. 4 was formed by mixing cinnamaldehyde with a dispersant, i.e., nonylphenol ethoxylated with 20 moles of ethylene oxide per mole. The amount of the dispersant in Blend No. 4 was about 17% by weight of the blend.

Various quantities of a bismuth compound, i.e., bismuth trioxide, were added to some of the blends, and the blends with and without bismuth compound were added to aqueous 15% by weight hydrochloric acid solution samples and tested to determine the corrosion loss in pounds per square foot of various metals in contact

therewith in accordance with the procedure described in Example 1 above. The results of these tests are set forth in Table II below.

## TABLE II

Corrosion Inhibiting Composition Tests

| Aldehyde[1] Blend No. | Blend Concentration in Acid Solution, % by Volume | Coupon Metal Type | Corrosion Loss, lb/ft[2] No Bismuth Compound Present in Acid Solution | 0.8 mMole of Bismuth Compound[2] Present per Liter of Acid Solution | 4 mMoles of Bismuth Compound[2] Present per Liter of Acid Solution |
|---|---|---|---|---|---|
| 1 | 2 | N80[3] Steel | 0.078 | 0.050 | 0.008 |
| 2 | 2 | N80 Steel | 0.073 | 0.017 | 0.006 |
| 3 | 2 | N80 Steel | 0.025 | 0.005 | 0.002 |
| 4 | 2 | N80 Steel | 0.037 | 0.166 | 0.004 |
| 1 | 2 | 13Cr[4] | 0.129 | 0.319 | 0.637 |
| 2 | 2 | 13Cr | 0.082 | 0.254 | 0.014 |
| 3 | 2 | 13Cr | 0.063 | 0.010 | 0.004 |
| 4 | 2 | 13Cr | 0.112 | 0.347 | 0.011 |
| 1 | 2 | AF-22[5] | 0.758 | 0.718 | 0.696 |
| 2 | 2 | AF-22 | 0.496 | 0.046 | 0.024 |
| 3 | 2 | AF-22 | 0.539 | 0.083 | 0.008 |
| 4 | 2 | AF-22 | 0.723 | 0.692 | 0.006 |

[1] Cinnamaldehyde
[2] Bismuth Trioxide
[3] N80 Steel is a low grade tubular steel.
[4] 13Cr is 13% chromium martensitic steel.
[5] AF-22 is 22% chrome-5% nickel duplex steel.

From Table II it can again be seen that the corrosion inhibiting compositions of the present invention (Blends Nos. 3 and 4 with bismuth) provide excellent corrosion inhibition.

## Claims

1. A composition for reducing or inhibiting the corrosion of metal surfaces, which composition comprises an aldehyde having the general formula:

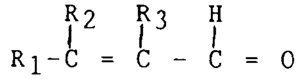

wherein $R_1$ represents a saturated or unsaturated, substituted or unsubstituted, aliphatic hydrocarbon group containing from 3 to 12 carbon atoms; or a substituted or unsubstituted aryl group; or any other atom or group which does not adversely affect the corrosion inhibition properties of said aldehyde;

$R_2$ represents hydrogen; a saturated or unsaturated, substituted or unsubstituted, aliphatic hydrocarbon group containing from 3 to 12 carbon atoms; a substituted or unsubstituted aryl group; or any other

atom or group which does not adversely affect the corrosion inhibition properties of said aldehyde; and

$R_3$ represents hydrogen; a saturated or unsaturated, substituted or unsubstituted, aliphatic hydrocarbon group containing from 1 to 5 carbon atoms; or a substituted or unsubstituted aryl group; or any other atom or group which does not adversely affect the corrosion inhibition properties of said aldehyde, wherein the total number of carbon atoms in $R_1$, $R_2$ and $R_3$ is from 1 to 16; and a metal compound selected from antimony compounds and bismuth compounds, or any mixture of two or more such metal compounds.

**2.** A composition according to claim 1, wherein the weight ratio of said aldehyde to said metal compound is from 10:1 to 1:15.

**3.** A composition according to claim 1 or 2, wherein the aldehyde is cinnamaldehyde, hydroxycinnamaldehyde or methoxycinnamaldehyde.

**4.** A composition according to claim 1, 2 or 3, wherein the metal compound is an antimony oxide, an antimony halide, antimony tartrate, antimony citrate, an alkali metal salt of antimony tartrate or of antimony citrate, an alkali metal salt of pyroantimonate, or an antimony adduct of ethylene glycol.

**5.** A composition according to claim 1,2,3 or 4, wherein the metal compound is a bismuth oxide, a bismuth halide, bismuth tartrate, bismuth citrate, an alkali metal salt of bismuth tartrate, bismuth citrate or bismuth oxyhalogens.

**6.** A composition according to any of claims 1 to 5, which further comprises a quaternary ammonium compound in an amount such that the weight ratio of quaternary ammonium compound to aldehyde is from 1:10 to 10:1.

**7.** A composition according to claim 6, wherein the quaternary ammonium compound is chloromethylnaphthyl quinolinium chloride.

**8.** A composition according to any of claims 1 to 7, which further comprises an aqueous liquid carrier in which the aldehyde and metal compound are dispersed or dissolved.

**9.** A composition according to claim 8, which further comprises a surfactant for facilitating the dispersion of said aldehyde and metal compound in said aqueous liquid carrier.

**10.** A composition according to claim 9, wherein the surfactant is nonylphenol ethoxylated with from 10 to 20 moles of ethylene oxide per mole.

European Patent Office

# EUROPEAN SEARCH REPORT

Application Number
EP 93308046.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US - A - 5 120 471 (JASINSKI et al.) * Abstract; claims 1,2,4,8, 12; column 4, lines 18-21,38-68; column 5, lines 1-9,15, 16 * -- | 1-6,9 | C 23 F 11/10<br>C 23 F 11/12<br>C 23 F 11/18<br>E 21 B 41/02 |
| X | EP - A - 0 489 498 (HALLIBURTON) * Abstract; claims 1,2,5,8 * -- | 1,4,8-10 | |
| A | EP - A - 0 165 787 (HALLIBURTON) * Claims 1,7,9; table I * ---- | 1,4 | |
| | | | TECHNICAL FIELDS SEARCHED (Int. Cl.5)<br>C 23 F<br>E 21 B |

The present search report has been drawn up for all claims

| Place of search | Date of completion of the search | Examiner |
|---|---|---|
| VIENNA | 30-12-1993 | SEIRAFI |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)